# EUROPÄISCHE PATENTSCHRIFT

(11) **EP 1 872 644 B1**
(45) Veröffentlichungstag und Bekanntmachung des Hinweises auf die Patenterteilung: **02.01.2013**
(21) Anmeldenummer: 07105119.7
(22) Anmeldetag: 28.03.2007
(51) Int. Cl.: A01D 41/14

(54) **Verfahren und Vorrichtung zur Steuerung einer Erntebergungsvorrichtung**
Method and device for operating a harvest collecting device
Procédé et dispositif de commande d'un dispositif de ramassage de récolte

(30) Priorität: 26.06.2006 DE 102006029608
(43) Veröffentlichungstag der Anmeldung: 02.01.2008
(73) Patentinhaber: CLAAS Selbstfahrende Erntemaschinen GmbH, 33428 Harsewinkel (DE)
(72) Erfinder: Drewes, Rainer, 27367, Bötersen (DE); Quincke, Gunnar, 59494, Soest (DE); Bürmann, Dominik, 33415, Verl (DE)

(56) Entgegenhaltungen:
- DE-A1- 19 508 887
- DE-U1- 9 214 178
- US-A- 3 628 317
- US-A- 4 124 970

## Beschreibung

Die Erfindung betrifft ein Verfahren und eine Vorrichtung zur Steuerung einer über eine höhenverstellbare Einzugsvorrichtung an einer Erntemaschine angeordneten Erntebergungsvorrichtung nach den Oberbegriffen der Ansprüche 1 und 4.

Fahrbare Erntemaschinen, insbesondere Mähdrescher, sind mit einem höhenverstellbaren Schneidwerk versehen, welches das Erntegut vom Feld schneidet und dann aufnimmt. Das Erntegut wird mit einem Messerbalken abgeschnitten und mit einer Einzugsschnecke einer nachfolgenden Drescheinrichtung zugeführt Das Schneidwerk trägt eine Haspel, die die Annahme des Erntegutes zum Messerbalken und die Welterförderung zur Einzugsschnecke sicherstellt, so dass ein kontinuierlicher Gutfluss entsteht und die Drescheinrichtung kontinuierlich beschickt wird. Die Funktion der Haspel ist bei liegendem Erntegut besonders wichtig. Die an der Haspel angeordneten Haspelzinken heben das Erntegut an, damit der Messerbalken unter das Erntegut gelangt, um die Halme bodennah abzuschneiden, so dass der Ernteverlust so gering wie möglich ist. Um eine gute Förderlsistung zu erreichen, ist die Umfangsgeschwindigkeit der Haspel so eingestellt, dass eine Voreilung zur Vorfahrtgeschwindigkeit des Mähdreschers gegeben ist. Die Höhe der Haspel wird z. B. bei Lagergetreide möglichst niedrig eingestellt, um eine bestmögliche Wirkung zu erzielen. Im stehenden Bestand wird die Höhe der Haspel ständig an die Höhe des Bestandes angepasst. Dies gilt auch, wenn der Bediener eine andere Schnitthöhe des Schneidwerks einstellt

Die US 4,124,970 offenbart eine Höhensteuerung für ein Schneidwerk mit einer Haspel und einem flexiblen, schwimmend aufgehängtem Mähbalken, der durch eine abschnittsweise Auslenkung quer zur Fahrtrichtung Bodenunebenheiten folgt und diese somit für einen gleichmäßigen Schnitt von Erntegut ausgleicht. Die Höhensteuerung der Haspel erfolgt in Abhängigkeit von der Position des Mähbalkens, um eine Berührung zwischen der Haspel und dem Mähbalken zu verhindern. Die aus der US 4,124,970 bekannte Höhensteuerung positioniert die Haspel in einer Position, in der die Haspel stets oberhalb des höchsten Abschnittes des flexibien Mähbalkens gehalten wird.

Aus der DE 29 00 841 ist ein automatisches Haspelhöheneinstellungsgerät bekannt. Mit einer infrarot. Sender- Empfängerelnhelt am Haspeltragarm wird das Vorhandensein von Erntegut in einer bestimmten Hohe auf dem Feld erfasst. Befindet sich in der überwachten Höhe Erntegut, so wird die Haspel angehoben. Befindet sich in der überwachten Höhe kein Erntegut so wird die Haspel abgesenkt.

Nachteilig bei den bekannten Mähdreschem ist, dass die Haspel mit der Kabine kollidiert, wenn die Haspelhöhe bei hochwachsenden Fruchtarten angepasst wird.

Der vorliegenden Erfindung liegt daher die Aufgabe zugrunde, die Nachteile des Standes der Technik zu vermeiden und insbesondere ein Verfahren und eine Vorrichtung anzugeben, die die optimale Gutführung durch die Haspel zugunsten einer kollisionsfreien Höhenführung der Haspel einschränkt.

Diese Aufgabe wird erfindungsgemäß durch die kennzeichnenden Merkmale der Ansprüche 1 und 4 gelöst. Weitere vorteilhafte Wirkungen des Erfindungsgegenstandes ergeben sich aus den Unteransprüchen.

Indem die Höhenführung der Aufnahmevorrichtung begrenzt wird, wird verhindert, dass beispielsweise die Haspel beim Anheben des Einzugskanals mit der Erntemaschine kollidiert, wodurch Beschädigungen vermieden werden.

Hierzu ist die Begrenzung der Höhenführung der Aufnahmevorrichtung durch wenigstens einen Kanalgrenzschwenkwinkel der Einzugsvorrichtung vorgebbar, wobei der Kanalgrenzschwenkwinkel eine obere Grenze für den Schwenkbereich der Einzugsvorrichtung festiegt und wobei die Aufnahmevorrichtung abgesenkt wird, wenn die Einzugsvorrichtung beim Anheben der Einzugsvorrichtung den Kanalgrenzschwenkwinkel erreicht, so dass die Aufnahmevorrichtung in einen Bereich verschwenkt wird, bei der sie beim weiteren Anheben des Einzugskanals einen Sicherheitsabstand zur Kabine des Mähdreschers einhält Vorzugsweise ist die Begrenzung der Höhenführung der Aufnahmevorrichtung durch wenigstens einen Haspelgrenzschschwenkwinkel für die Aufnahmevorrichtung vorgebbar, wobei der Haspelgrenzschwenkwinkel eine untere Grenze für den Schwenkbereich der Aufnahmevorrichtung festlegt und wobei die Aufnahmevorrichtung auf den vorgebbaren Haspelgrenzschwenkwinkel abgesenkt wird, so dass die Aufnahmevorrichtung nur soweit wie nötig abgesenkt wird. um eine Kollision zu verhindern.

Vorteilhafterweise ist die Begrenzung der Höhenführung der Aufnahmevorrichtung durch wenigstens einen Schwellenschwenkwinkel für die Aufnahmevorrichtung vorgebbar ist wobei der Schwellenschwenkwinkel eine Grenze innerhalb des Schwenkbereichs der Aufnahmevorrichtung festlegt und wobei die Aufnahmevorrichtung auf den Haspelgrenzschwenkwinkel abgesenkt wird, wenn die ermittelte Lage der Aufnahmevorrichtung den Schwellenschwenkwinkel der Aufnahmevorrichtung übersteigt

Vorzugsweise ist die Höhenführung der Aufnahmevorrichtung durch wenigstens einen Haspelgrenzschwenkwinkel für die Aufnahmevorrichtung vorgebbar, so dass die Einzugsvorrichtung nur dann verschwenkt wird, wenn erhöhte Gefahr der Kollision der Aufnahmevorrichtung mit der Kabine besteht.

Die Vorrichtung weist Mittel auf, die geeignet sind die Höhenführung der Aufnahmevorrichtung zu begrenzen, damit eine Kollision der Haspet mit der Kabine vermieden wird.

Die Mittel sind erfindungsgemäss wenigstens ein erster Sensor zur Erfassung der Lage der Ernteschneidvorrichtung zur Erntemaschine und wenigstens ein zweiter Sensor zur Erfassung der Lage der Aufnahmevorrichtung zur Erntegutschneidvorrichtung. Die Vorrichtung kann ohne großen baulichen Aufwand ausgeführt werden, da die verwendeten elektronischen Bauteile auf einfache Weise an die vorhandenen mechanischen Bauteile angeschlossen werden können.

Die Sensoren sind an eine Steuereinheit gekoppelt, so dass die Höhenführung der Aufnahmevorrichtung automatisch begrenzt wird.

In einer vorteilhaften Ausgestaltung der Erfindung ist der erste Sensor als Drehwinkelsensor ausgeführt, wobei der Drehwinkelsensor einen Drehwinkel der Einzugsvorrichtung bezüglich der Erntemaschine sensiert, so dass mit dem Sensor sowohl zur Lage der Einzugsvorrichtung zum Mähdrescher als auch die Lage des an der Einzugsvorrichtung angeordneten Erntegutschneidvorrichtung zur Erntemaschine ermittelbar ist.

In einer weiteren vorteilhaften Ausgestaltung der Erfindung ist der zweite Sensor als Drehwinkelsensor ausgeführt, wobei der Drehwinkelsensor einen Drehwinkel der Aufnahmevorrichtung bezüglich der Einzugsvorrichtung sensiert, so dass auf einfache Weise die Lage der Aufnahmevorrichtung zur Einzugsvorrichtung ermittelbar ist.

Dadurch, dass in der Steuereinheit wenigsten ein Kanalgrenzschwenkwinkel der Einzugsvorrichtung und wenigstens ein Schwellenschwenkwinkel der Aufnahmevorrichtung gespeichert ist, kann die manuelle Höhenverstellung der Haspel durch den Bediener nur innerhalb der vorgegebenen Werte erfolgen, so dass Schäden durch unsachgemäße Bedienung ausgeschlossen werden können.

Indem die Steuereinheit die Drehwinkel der Einzugsvorrichtung mit dem Kanalgrenzschwenkwinkel und den Drehwinkel der Aufnahmevorrichtung mit dem Schwellenschwenkwinkel vergleicht, ist eine einfache Auswertung möglich.

Eine einfache Steuerung der Aufnahmevorrichtung ist möglich, wenn die Steuereinheit ein Aufnahmevorrichtungsenksignal generiert, wenn der Drehwinkel der Einzugsvorrichtung größer oder gleich dem Kanalgrenzschwenkwinkel und der Drehwinkel der Aufnahmevorrichtung größer oder gleich dem Schwellenschwenkwinkel ist.

Eine einfache Auswahl der notwendigen Einstellungen durch den Bediener ist möglich, wenn der Kanalgrenzschwenkwinkel und/oder der Haspeigrenzschwenkwinkel abhängig von dem Typ der Ernteguntbergungsvorrichtung und dem Typ des Erntemaschine in der Steuereinheit gespeichert sind.

Der Fahrer wird zusatzlich entlastet, wenn der Typ der Erntegutbergungsvorrichtung automatisch erkannt wird und der Karalgrenzschwerkwinkel und/oder der Haspelgrenzschwenkwinkel automatisch an die erkannte Erntegutbergungsvorrichtung angepasst wird.

Weitere vorteilhafte Ausgestaltungen sind Gegenstand weiterer Unteransprüche und werden nachfolgend an Hand des in mehreren Figuren dargestellten Ausführungsbeispiels näher erläutert.

Es zeigen:
Fig.1 den vorderen Teil eines erfindungsgemäßen Mähdreschers in der Seitenansicht,
Fig. 2 den erfindungsgemäßen Mähdrescher gemäß Fig. 1 mit angehobenem Schneidtisch und abgesenkter Haspel.

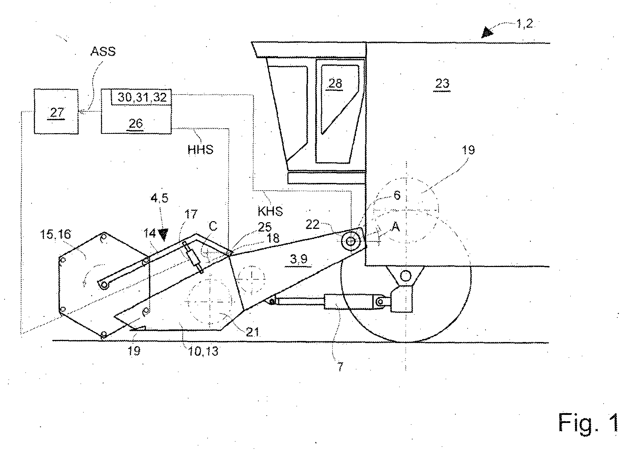

Fig 1 zeigt die Seitenansicht einer als Mähdrescher 1 ausgeführten landwirtschaftlichen Erntemaschine 2 mit einer als Einzugskanal 3 ausgeführten Einzugsvorrichtung 9 und einer am vorderen Ende des Einzugskanals 3 angeordneten als Schneidwerk 4 ausgeführten Erntebergungsvorrichtung 5. Der Einzugskanal 3 ist um eine Schwenkachse 6 am Mähdrescher 1 beweglich angeordnet und kann durch wenigstens einen an dem Einzugskanal 3 und dem Mähdrescher 1 angelenkten Hubzylinder 7 zur Höhenführung des Schneidwerks 4 verschwenkt werden. Das Schneidwerk 4 besteht aus einer als Schneidtisch 13 ausgeführten Ernteschneidvorrichtung 10 und aus einer an zwei höhenverschwenkbaren Haspeltragarmen 14 an dem Schneidtisch 13 befestigten als Haspel 15 ausgeführten Aufnahmevorrichtung 16. Zwischen dem Schneidtisch 13 und den Haspeltragarmen 14 sind zwei Hubzylinder 17 angelenkt, mit denen die Haspeltragarme 15 um einen Gelenkpunkt 18 drehend, verschwenkt werden können und dabei die Höhenlage der Haspel 15 ändern.
Die rotierend angetriebene Haspel 15 sorgt erstens für eine kontinuierliche Annahme des Erntegutes sowie für dessen kontinuierliche Förderung durch das Schneidwerk 4 und durch den Einzugskanal 3 zu einer an sich bekannten und daher hier nicht näher erläuterten Drescheinrichtung 20 des Mähdreschers 1 Das Erntegut wird mit einem an der vorderen Kante des Schneidtisches 13 angeordneten Messerbalken 19 abgeschnitten und das abgeschnittenen Erntegut anschließend mit Hilfe der Haspel 15 zu einer im Schneidtisch 13 angeordneten, rotierend angetriebenen Einzugsschnecke 21 gefördert. Die Einzugsschnecke 21 führt das Erntegut dem Einzugskanal 3 zu, der das Erntegut zur Drescheinrichtung 20 weiterfördert.

An dem dargestellten Mähdrescher 1 sind nachfolgend näher beschriebene Sensoren 22, 25 angebracht.

Ein an der Schwenkachse 6 angeordneter Drehwinkelsensor 22 ermittelt den Drehwinkel A zwischen dem Einzugskanal 3 und dem Maschinengehäuse 23 des Mähdreschers 1. Das von dem Drehwinkelsensor 22 erzeugte Kanalhöhensignal KHS ist direkt proportional zur Lage des Einzugskanals 3 zum Maschinengehäuse 23 des Mähdreschers 1.

Ein weiterer Drehwinkelsensor 25 ist in der Gelenkachse 18 angeordnet und ermittelt den Drehwinkel C der Haspeltragarme 14 zum Schneidtisch 4. Der Drehwinkelsensor 25 generiert abhängig vom Drehwinkel C ein Haspelhöhensignal HHS, wobei das Haspelhöhensignal HHS direkt proportional zu Lage der Haspel 15 zum Schneidtisch 13 ist

Die Sensoren 22, 25 sind mit einer Steuereinheit 26 verbunden, an die von den Sensoren 22. 25 generierten Signale KHS und HHS übermittelt werden.

Die Steuereinheit 26 verarbeitet die Signale KHS und HHS auf nachfolgend beschriebende Weise zur erfindungsgemäßen begrenzten Höhenführung der Haspel 15, um eine Kollision der Haspel 15 mit der Kabine 28 der Erntemaschine 1 zu vermeiden Die Begrenzung der Höhenfuhrung der Haspel 15 ist durch die Lage der Kabine 28 definiert.

Hierzu ist in der Steuereinheit 26 zur Begrenzung der Höhenführung der Haspel 15 ein Kanalgrenzschwenkwinkel 30 für den Einzugskanal 3 gespeichert, der eine obere Grenze für den Schwenkbereich des Einzugskanals festlegt. Zudem ist in der Steuereinheit ein Haspelgrenzschwenkwinkel 31 für die Haspel 15 gespeichert, der eine untere Grenze für den Schwenkbereich der Haspel festlegt und in der Steuereinheit ist ein Schwellenschwenkwinkel 32 für die Haspel 15 gespeichert der eine Grenze innerhalb des Schwenkbereichs der Haspel 15 festlegt

Die Steuereinheit 26 vergleicht den gemessenen Drehwinkel A des Einzugskanals 3 permanent mit dem vorgegebenen Kanalgrenzschwenkwinkel 30 und den Drehwinkel B der Haspel 15 permanent mit dem Schwellenschwenkwinkel 30 und dem Haspelgrenzschwenkwinkel 31

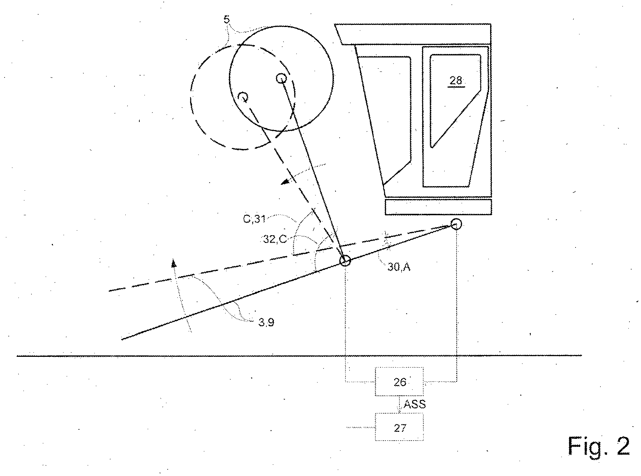

In Fig. 2 ist der Mähdrescher gemäß Fig. 1 schematisch dargestellt, anhand der die Funktion der Höhenbegrenzung nachfolgend näher erläutert wird.
Sobald der Drehwinkel A des Einzugskanals 3 beim Anheben des Einzugskanals 3 den Kanalgrenzschwenkwinkel 30 erreicht und der gemessene Drehwinkel C der Haspeltragarme 14 beim Erreichen des Kanalgrenzschwenkwinkel größer als der vorgegebene Schwellenschwenkwinkel 32 ist oder diesem gleicht und der ermittelte Drehwinkels C der Haspel 15 ungleich dem Haspelgrenzschwenkwinkel 31 ist, erzeugt die Steuereinheit 26 ein Aufnahmevorrichtungssenksignal ASS.
Die Steuereinheit 26 ist mit einer hydraulischen Steuereinheit 27 für die Hubzylinder 7,17 verbunden, die die Druckbeaufschlagung beziehungsweise Druckentlastung und damit die Ein- und Ausfahrt der Hubzylinder 7, 17 regelt

Die hydraulische Steuereinheit 27 druckentlastet in Abhängigkeit vom Aufnahmevorrichtungssignal ASS die Hubzylinder 17, bis die Haspel 15 auf den Haspelgrenzschwenkwinkel 31 abgesenkt ist.

Mit dieser Regelung ist eine Erhöhung der Aushubhöhe der Haspel 15 unter Vermeidung der Kollision mit der Kabine der Erntemaschine 1 möglich.

Ebenso ist jedoch auch eine Ausführung denkbar, bei der das Verschwenken des Einzugskanal 3 ausschließlich in Abhängigkeit von der Lage der Haspel 15 erfolgen könnte.

Vorteilhafterweise ist der Kanalgrenzschwenkwinkel 30 und der Haspelgrenzschwenkwinkel 31 abhängig vom Typ der Erntegutbergungsvorrichtung 5 und dem Typ der Erntemaschine 2 in der Steuereinheit 25 gespeichert. so dass eine individuelle Anpassung der Bewegungsgrenzen der Haspel 16 auf einfache Weise durchführbar ist

Der Fahrer der Erntemaschine 1, 2 wird zusätzlich entlastet, wenn der Typ der Erntegutbergungsvorrichtung 4, 5 automatisch erkannt wird und der Kanalgrenzschwenkwinkel 30 und der Haspelgrenzschwenkwinkel 31 automatisch an die erkannte Erntegutbergungsvorrichtung 4, 5 angepasst werden.

Die Erfindung ist nicht auf das dargestellte Ausführungsbeispiel beschränkt. Es ist denkbar, dass die Aufnahmevorrichtung ein Niederhalter einer als Pick-Up ausgeführten Erntebergungsvorrichtung ist, die an einem Feldhäcksler angeordnet ist.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Mähdrescher
- 2: Landwirtschaftliche Erntemaschine
- 3: Einzugskanal
- 4: Schneidwerk
- 5: Erntebergungsvorrichtung
- 6: Schwenkachse
- 7: Hubzylinder
- 13: Schneidtisch
- 14: Haspeltragarm
- 15: Haspel
- 16: Aufnahmevorrichtung
- 17: Hubzylinder
- 18: Gelenkpunkt
- 19: Messerbalken
- 20: Drescheinrichtung
- 21: Messerbalken
- 22: Drehwinkelsensor
- 23: Maschinengehäuse
- 24: Drehwinkelsensor
- 25: Drehwinkelsensor
- 26: Steuereinheit
- 27: Hydraulische Steuereinheit
- 28: Kabine
- 30: Kanalgrenzschwenkwinkel
- 31: Haspelgrenzschwenkwinkel
- 32: Schwellenschwenkwinkel
- A: Drehwinkel
- C: Drehwinkel
- FR: Fahrtrichtung
- KHS: Kanalhöhensignal
- HHS: Haspelhöhensignal
- ASS: Aufnahmevorrichtungssenksignal

## Patentansprüche

1. Verfahren zur Steuerung einer über eine höhenverstellbare Einzugsvorrichtung (3. 9) an einer Erntemaschine (1) angeordneten Erntebergungsvorrichtung (4. 5). wobei die Erntebergungsvorrichtung (4, 5) zumindest eine Erntegutschneidvorrichtung (10) und zumindest eine höhenverstellbare Aufnahmevorrichtung (15,16) aufweist, wobei die Höhenführung der Aufnahmevorrichtung (15, 16) begrenzt wird,
**dadurch gekennzeichnet,**
**dass** die Begrenzung der Höhenführung der Aufnahmevorrichtung (15, 16) durch wenigstens einen Kanalgrenzschwenkwinkel (30) der Einzugsvorrichtung (3, 9) vorgebbar ist, wobei der Kanalgrenzschwenkwinkel (30) eine obere Grenze für den Schwenkbereich der Einzugsvorrichtung (3, 9) festlegt und wobei die Aufnahmevorrichtung (15, 16) abgesenkt wird, wenn die Einzugsvorrichtung (3, 9) beim Anheben der Einzugsvorrichtung (3, 9) den Kanalgrenzschwenkwinkel (30) erreicht.

2. Verfahren nach wenigstens einem der vorhergehenden Ansprüche,
**dadurch gekennzeichnet,**
**dass** die Begrenzung der Höhenführung der Aufnahmevorriohtung (16, 16) durch wenigstens einen Haspelgrenzschwenkwinkel (31) für die Aufnahmevorrichtung (15, 16) vorgebbar ist, wobei der Haspelgrenzschwenkwinkel (31) eine untere Grenze für den Schwenkbereich der Aufnahmevorrichtung (15, 16) festlegt und wobei die Aufnahmevorrichtung (15, 16) auf den vorgebbaren Haspelgrenzschwenkwinkel (31) abgesenkt wird.

3. Verfahren nach wenigstens einem der vorhergehenden Ansprüche,
**dadurch gekennzeichnet,**
**dass** die Begrenzung der Höhenführung der Aufnahmevorrichtung (15, 16) durch wenigstens einen Schwellenschwenkwinkel (32) für die Aufnahmevorrichtung (15, 16) vorgebbar ist, wobei der Schwellenschwenkwinkel (32) eine Grenze innerhalb des Schwenkbereichs der Aufnahmevorrichtung (15, 16) festlegt, wobei die Aufnahmevorrichtung (15, 16) auf den Haspelgrenzschwenkwinkel (31) abgesenkt wird, wenn die ermittelte Lage der Aufnahmevorrichtung (15, 16) den Schwellenschwenkwinkel (32) der Aufnahmevorrichtung (15, 16) überstelgt.

4. Vorrichtung zur Steuerung einer über eine höhenverstellbare Einzugsvorrichtung (3, 9) an einer Emtemaschine (1) angeordneten Eentebergungsvorrichtung (4, 5), wobei die Erntebergungsvorrichtung (4, 5) zumindest eine Erntegutschneidvorrichtung (10) und zumindest eine höhenverstellbare Aufnahmevorrichtung (15, 16) aufweist,
**dadurch gekennzeichnet,**
**dass** die Vorrichtung Mittel aufweist, die geeignet sind die Höhenführung der Aufnahmevorrichtung (15, 16) zu begrenzen, und dass die Mittel (22, 25) zur Höhenführung der Aufnahmevorrichtung (15, 16) wenigstens ein erster Sensor (22) zur Erfassung der Lage der Ernteschneidvorrichtung (10) zur Erntemaschine (1) und wenigstens ein zweiter Sensor (25) zur Erfassung der Lage der Aufnahmevorrichtung (15, 16) zur Erntegutschneidvorrichtung (10) sind.

5. Vorrichtung nach Anspruch 4,
**dadurch gekennzeichnet,**
**dass** die Sensoren (22, 25) an eine Steuereinheit (26) gekoppelt sind

6. Vorrichtung nach einem der Ansprüche 4 oder 5,
**dadurch gekennzeichnet,**
**dass** der erste Sensor (22) als Drehwinkelsensor (22) ausgeführt ist, wobei der Drehwinkelsensor (22) einen Drehwinkel (A) der Einzugsvorrichtung (3, 9) bezüglich der Erntemaschine (1) sensiert.

7. Vorrichtung nach einem der Ansprüche 4 bis 6,
**dadurch gekennzeichnet,**
**dass** der zweite Sensor (25) als Drehwinkelsensor (25) ausgeführt, wobei der Drehwinkelsensor (25) einen Drehwinkel (B) der Aufnahmevorrichtung (15, 16) bezüglich der Einzugsvorrichtung (3, 9) sensiert.

8. Vorrichtung nach einem der Ansprüche 5 bis 7,
**dadurch gekennzeichnet,**
**dass** in der Steuereinheit (26) wenigstens ein Kanalgrenzschwenkwinkel (30) der Einzugsvorrichtung (3, 9) und wenigstens ein Schwellenschwenkwinkel (32) der Aufnahmevorrichtung (15, 16) und wenigstens, ein Haspelgrenzschwenkwinkel (31) für die Aufnahmevorrichtung (15, 16) gespeichert sind.

9. Vorrichtung nach einem der Ansprüche 5 bis 8,
**dadurch gekennzeichnet,**
**dass** die Steuereinheit (26) die Drehwinkel (A) der Einzugsvorrichtung (3, 9) mit dem Kanalgrenzschwenkwinkel (30) und den Drehwinkel (B) der Aufnahmevorrichtung (15, 16) mit dem Schwellenschwenkwinkel (32) und/oder dem Haspelgrenzschwenkwinkel (31) vergleicht.

10. Vorrichtung nach wenigstens einem der Ansprüche 4 bis 9,
**dadurch gekennzeichnet,**
**dass** die Steuereinheit (26) ein Aufnahmevorrichtungsenksignal (ASS) generiert, wenn der Drehwinkel (A) der Einzugsvorrichtung (3, 9) größer oder gleich dem Kanalgrenzschwenkwinkel (31) und der Drehwinkel (B) der Aufnahmevorrichtung (15, 16) größer oder gleich dem Schwellenschwenkwinkel (32) und der Drehwinkel (B) der Aufnahmevorrichtung (15, 16) ungleich dem Haspelgrenzschwenkwinkel (31) ist.

11. Vorrichtung nach wenigstens einem der Ansprüche 4 bis 10,
**dadurch gekennzeichnet,**
**dass** die Einzugsvorrichtung (3, 9) über wenigstens einen Hubzylinder (7) verschwenkbar ist, wobei der Hubzylinder (7) in Abhängigkeit vom Aufnahmevorrichtungsenksignal (ASS) druckentlastet wird.

12. Vorrichtung nach wenigstens einem der Ansprüche 4 bis 11,
**dadurch gekennzeichnet,**
**dass** der Kanalgrenzschwenkwinkel (30) und/oder der Haspelgrenzschwenkwinkel (31) abhängig von dem Typ der Erntebergungsvorrichtung (4, 5) und des Typs des Erntemaschine (1, 2) in der Steuereinheit (26) gespeichert ist.

13. Vorrichtung nach wenigstens einem der Ansprüche 4 bis 12,
**dadurch gekennzeichnet,**
**dass** der Typ der Erntegutbergungsvorrichtung (4, 5) automatisch erkannt wird und der Kanalgrenzschwenkwinkel (30) und/oder der Haspelgrenzschwenkwinkel (31) automatisch an die erkannte Erntebergungsvorrichtung (4, 5) angepasst wird.

## Claims

1. A method of controlling a crop gathering apparatus (4, 5) arranged on a harvesting machine (1) by way of a height-adjustable intake apparatus (3, 9), wherein the crop gathering apparatus (4, 5) has at least one crop material cutting apparatus (10) and at least one height-adjustable pickup apparatus (15, 16), wherein the heightwise guidance of the pickup apparatus (15, 16) is limited,
**characterised in that**
limitation of the heightwise guidance of the pickup apparatus (15, 16) can be predetermined by at least one passage-limiting pivotal angle (30) of the intake apparatus (3, 9), wherein the passage-limiting pivotal angle (30) establishes an upper limit for the pivotal range of the intake apparatus (3, 9) and wherein the pickup apparatus (15, 16) is lowered if the intake apparatus (3, 9) reaches the passage-limiting pivotal angle (30) upon lifting of the intake apparatus (3, 9).

2. A method according to claim 1 **characterised in that** limitation of the heightwise guidance of the pickup apparatus (15, 16) can be predetermined by at least one reel-limiting pivotal angle (31) for the pickup apparatus (15, 16), wherein the reel-limiting pivotal angle (31) establishes a lower limit for the pivotal range of the pickup apparatus (15, 16) and wherein the pickup apparatus (15, 16) is lowered to the predeterminable reel-limiting pivotal angle (31).

3. A method according to at least one of the preceding claims **characterised in that** limitation of the heightwise guidance of the pickup apparatus (15, 16) can be predetermined by at least one threshold pivotal angle (32) for the pickup apparatus (15, 16), wherein the threshold pivotal angle (32) establishes a limit within the pivotal range of the pickup apparatus (15, 16) and wherein the pickup apparatus (15, 16) is lowered to the reel-limiting pivotal angle (31) if the ascertained position of the pickup apparatus (15, 16) exceeds the threshold pivotal angle (32) of the pickup apparatus (15, 16).

4. Apparatus for controlling a crop gathering apparatus (4, 5) arranged on a harvesting machine (1) by way of a height-adjustable intake apparatus (3, 9), wherein the crop gathering apparatus (4, 5) has at least one crop material cutting apparatus (10) and at least one height-adjustable pickup apparatus (15, 16),
**characterised in that**
the apparatus has means suitable for limiting the heightwise guidance of the pickup apparatus (15, 16) and the means (22, 25) for heightwise guidance of the pickup apparatus (15, 16) are at least one first sensor (22) for detecting the position of the crop cutting apparatus (10) relative to the harvesting machine (1) and at least one second sensor (25) for detecting the position of the pickup apparatus (15, 16) relative to the crop material cutting apparatus (10).

5. Apparatus according to claim 4 **characterised in that** the sensors (22, 25) are coupled to a control unit (26).

6. Apparatus according to one of claims 4 or 5 **characterised in that** the first sensor (22) is in the form of a rotational angle sensor (22), wherein the rotational angle sensor (22) senses a rotational angle (A) of the intake apparatus (3, 9) with respect to the harvesting machine (1).

7. Apparatus according to one of claims 4 to 6 **characterised in that** the second sensor (25) is in the form of a rotational angle sensor (25), wherein the rotational angle sensor (25) senses a rotational angle (B) of the pickup apparatus (15, 16) with respect to the intake apparatus (3, 9).

8. Apparatus according to one of claims 5 to 7 **characterised in that** at least one passage-limiting pivotal angle (30) of the intake apparatus (3, 9) and at least one threshold pivotal angle (32) of the pickup apparatus (15, 16) and at least one reel-limiting pivotal angle (31) for the pickup apparatus (15, 16) are stored in the control unit (26).

9. Apparatus according to one of claims 5 to 8 **characterised in that** the control unit (26) compares the rotational angle (A) of the intake apparatus (3, 9) to the passage-limiting pivotal angle (30) and the rotational angle (B) of the pickup apparatus (15, 16) to the threshold pivotal angle (32) and/or the reel-limiting pivotal angle (31).

10. Apparatus according to at least one of claims 4 to 9 **characterised in that** the control unit (26) generates a pickup apparatus lowering signal (ASS) if the rotational angle (A) of the intake apparatus (3, 9) is greater than or equal to the passage-limiting pivoting angle (31) and the rotational angle (B) of the pickup apparatus (15, 16) is greater than or equal to the threshold pivotal angle (32) and the rotational angle (B) of the pickup apparatus (15, 16) is different from the reel-limiting pivoting angle (31).

11. Apparatus according to at least one of claims 4 to 10 **characterised in that** the intake apparatus (3, 9) is pivotable by way of at least one stroke cylinder (7), wherein the stroke cylinder (7) is relieved of pressure in dependence on the pickup apparatus lowering signal (ASS).

12. Apparatus according to at least one of claims 4 to 11 **characterised in that** the passage-limiting pivotal angle (30) and/or the reel-limiting pivoting angle (31) is stored in the control unit (26) in dependence on the type of crop gathering apparatus (4, 5) and the type of harvesting machine (1, 2).

13. Apparatus according to at least one of claims 4 to 12 **characterised in that** the type of crop material gathering apparatus (4, 5) is automatically recognised and the passage-limiting pivotal angle (30) and/or the reel-limiting pivotal angle (31) is automatically adapted to the recognised crop gathering apparatus (4, 5).

## Revendications

1. Procédé de commande d'un dispositif de récupération de récolte (4, 5) disposé sur une machine de récolte (1) par l'intermédiaire d'un dispositif d'alimentation (3, 9) réglable en hauteur, le dispositif de récupération de récolte (4, 5) comportant au moins un dispositif de coupe de produit de récolte (10) et au moins un dispositif de ramassage (15, 16) réglable en hauteur, le guidage en hauteur du dispositif de ramassage (15, 16) étant limité, **caractérisé en ce que** la limitation du guidage en hauteur du dispositif de ramassage (15, 16) peut être prescrite par au moins un angle de pivotement limite de canal (30) du dispositif d'alimentation (3, 9), l'angle de pivotement limite de canal (30) définissant une limite supérieure de la plage de pivotement du dispositif d'alimentation (3, 9) et le dispositif de ramassage (15, 16) étant abaissé quand le dispositif d'alimentation (3, 9) atteint l'angle de pivotement limite de canal (30) lors du levage du dispositif d'alimentation (3, 9).

2. Procédé selon au moins une des revendications précédentes, **caractérisé en ce que** la limitation du guidage en hauteur du dispositif de ramassage (15, 16) peut être prescrite par au moins un angle de pivotement limite de rabatteur (31) pour le dispositif de ramassage (15, 16), l'angle de pivotement limite de rabatteur (31) définissant une limite inférieure de la plage de pivotement du dispositif de ramassage (15, 16) et le dispositif de ramassage (15, 16) étant abaissé à l'angle de pivotement limite de rabatteur (31).

3. Procédé selon au moins une des revendications précédentes, **caractérisé en ce que** la limitation du guidage en hauteur du dispositif de ramassage (15, 16) peut être prescrite par au moins un angle de pivotement de seuil (32) pour le dispositif de ramassage (15, 16), l'angle de pivotement de seuil (32) définissant une limite à l'intérieur de la plage de pivotement du dispositif de ramassage (15, 16), le dispositif de ramassage (15, 16) étant abaissé à l'angle de pivotement limite de rabatteur (31) quand la position déterminée du dispositif de ramassage (15, 16) dépasse l'angle de pivotement de seuil (32) du dispositif de ramassage (15, 16).

4. Dispositif de commande d'un dispositif de récupération de récolte (4, 5) disposé sur une machine de récolte (1) par l'intermédiaire d'un dispositif d'alimentation (3, 9) réglable en hauteur, le dispositif de récupération de récolte (4, 5) comportant au moins un dispositif de coupe de produit de récolte (10) et au moins un dispositif de ramassage (15, 16) réglable en hauteur, **caractérisé en ce que** le dispositif comporte des moyens qui sont aptes à limiter le guidage en hauteur du dispositif de ramassage (15, 16), et **en ce que** les moyens (22, 25) de guidage en hauteur du dispositif de ramassage (15, 16) sont au moins un premier capteur (22) pour détecter la position du dispositif de coupe de produit de récolte (10) par rapport à la machine de récolte (1) et au moins un deuxième capteur (25) pour détecter la position du dispositif de ramassage (15, 16) par rapport au dispositif de coupe de produit de récolte (10).

5. Dispositif selon la revendication 4, **caractérisé en ce que** les capteurs (22, 25) sont couplés à une unité de commande (26).

6. Dispositif selon une des revendications 4 ou 5, **caractérisé en ce que** le premier capteur (22) est réalisé sous la forme d'un capteur d'angle de rotation (22), lequel capteur d'angle de rotation (22) détecte un angle de rotation (A) du dispositif d'alimentation (3, 9) par rapport à la machine de récolte (1).

7. Dispositif selon une des revendications 4 à 6, **caractérisé en ce que** le deuxième capteur (25) est réalisé sous la forme d'un capteur d'angle de rotation (25), lequel capteur d'angle de rotation (25) détecte un angle de rotation (B) du dispositif de ramassage (15, 16) par rapport au dispositif d'alimentation (3, 9).

8. Dispositif selon une des revendications 5 à 7, **caractérisé en ce qu'**au moins un angle de pivotement limite de canal (30) du dispositif d'alimentation (3, 9), au moins un angle de pivotement de seuil (32) du dispositif de ramassage (15, 16) et au moins un angle de pivotement limite de rabatteur (31) pour le dispositif de ramassage (15, 16) sont enregistrés dans l'unité de commande (26).

9. Dispositif selon une des revendications 5 à 8, **caractérisé en ce que** l'unité de commande (26) compare l'angle de rotation (A) du dispositif d'alimentation (3, 9) avec l'angle de pivotement limite de canal (30), et l'angle de rotation (B) du dispositif de ramassage (15, 16) avec l'angle de pivotement de seuil (32) et/ou l'angle de pivotement limite de rabatteur (31).

10. Dispositif selon une des revendications 4 à 9, **caractérisé en ce que** l'unité de commande (26) génère un signal d'abaissement de dispositif de ramassage (ASS) quand l'angle de rotation (A) du dispositif d'alimentation (3, 9) est supérieur ou égal à l'angle de pivotement limite de canal (30), quand l'angle de rotation (B) du dispositif de ramassage (15, 16) est supérieur ou égal à l'angle de pivotement de seuil (32), et quand l'angle de rotation (B) du dispositif de ramassage (15, 16) est différent de l'angle de pivotement limite de rabatteur (31).

11. Dispositif selon une des revendications 4 à 10, **caractérisé en ce que** le dispositif d'alimentation (3, 9) peut être amené à pivoter au moyen d'au moins un vérin (7), lequel vérin (7) est soulagé de la pression en fonction du signal d'abaissement de dispositif de ramassage (ASS).

12. Dispositif selon une des revendications 4 à 11, **caractérisé en ce que** l'angle de pivotement limite de canal (30) et/ou l'angle de pivotement limite de rabatteur (31) sont enregistrés dans l'unité de commande (26) en fonction du type de dispositif de récupération de récolte (4, 5) et du type de machine de récolte (1, 2).

13. Dispositif selon une des revendications 4 à 12, **caractérisé en ce que** le type de dispositif de récupération de récolte (4, 5) est détecté automatiquement et l'angle de pivotement limite de canal (30) et/ou l'angle de pivotement limite de rabatteur (31) sont adaptés automatiquement au type de dispositif de récupération de récolte (4, 5) détecté.
